# EUROPEAN PATENT APPLICATION

(11) **EP 4 707 349 A1**
(43) Date of publication of application: **11.03.2026**
(21) Application number: 25200414.8
(22) Date of filing: 05.09.2025
(51) Int. Cl.: C09D 11/17, C09D 11/50

(54) **COMPOSITION FOR PREPARING THERMOCHROMIC SOLID MARKER AND PREPARATION METHOD FOR THERMOCHROMIC SOLID MARKER**

(30) Priority: 06.09.2024 KR 20240121828; 20.08.2025 KR 20250115917
(71) Applicant: Dong-A Teaching Materials Co., Ltd., Daejeon 34362 (KR)
(72) Inventor: KIM, Hak Jae, 34362 Daejeon (KR); KOH, Young Hyoung, 34362 Daejeon (KR)
(74) Representative: Gill Jennings & Every LLP

(57) **Abstract**

The present disclosure relates to a composition for preparing a thermochromic solid marker, which enables the production of a color development means for a thermochromic writing instrument capable of being erased in response to a change in temperature in the form of a solid marker having desirable physical properties, and a preparation method for a thermochromic solid marker using the same. The composition for preparing a thermochromic solid marker comprises: 10 to 35 wt.% of microcapsule particles comprising a core composition containing a leuco dye and a developer, and a polymer resin shell surrounding the core composition; 5 to 20 wt.% of a gelling agent; 30 to 60 wt.% of water; and 0 to 10 wt.% of a glycol-based organic solvent.

## Description

### CROSS-REFERENCE TO RELATED APPLICATIONS

This application is based on and claims priority from Korean Patent Application No. 10-2024-0121828, filed on September 6, 2024 and Korean Patent Application No. 10-2025-0115917, filed on August 20, 2025, with the Korean Intellectual Property Office, the disclosure of which is incorporated herein in its entirety by reference.

### Technical Field

The present disclosure relates to a composition for preparing a thermochromic solid marker, which enables the preparation of a color development means for a thermochromic writing instrument capable of being erased in response to a change in temperature in the form of a solid marker having desirable physical properties, and a preparation method for a thermochromic solid marker using the same.

### BACKGROUND

Generally, writing instruments can be divided into those applied with liquid ink and those having solid color development means. Examples of writing instruments having solid color development means include solid drawing materials such as crayons, pastels, and aqueous gel stick. Among these, the solid drawing materials overcome the drawbacks of crayons and pastels, and their use is increasing.

Meanwhile, in order to address the issues inherent in existing writing instruments, such as the difficulty of erasing or correcting after writing, thermochromic ink compositions applicable to writing instruments have been proposed. Existing thermochromic ink compositions are disclosed in, for example, Korean Patent Nos. 10-2284625 and 10-1576329, Korean Patent Application Publication No. 10-2021-0148170, and the like. These existing thermochromic ink compositions generally include thermochromic microcapsule particles containing a thermosensitive colorant and a developer, and apply the principle of color development or discoloration due to the action of the thermosensitive colorant and developer at a certain temperature.

However, existing thermochromic ink compositions have only been proposed and developed for application primarily in writing instruments that use liquid inks, and no compositions have ever been proposed or developed for application in writing instruments having solid color development means, such as solid drawing materials.

Recently, Recently, there is a growing need for users to mark with solid fluorescent writing implements to remember or highlight important words or paragraphs according to their inclination, and then erase or correct them. However, as existing erasable thermochromic ink compositions have been developed only in forms suitable for liquid ink writing instruments, product development to meet these user needs has not been sufficiently conducted.

In particular, in the case of solid fluorescent writing instruments, despite there is considerable demand for them among users due to displaying vivid colors or the like, an erasable thermochromic coloring means applicable thereto has not been adequately developed, and therefore, the demand for such developments is rapidly increasing.

### SUMMARY

Therefore, it is an object of the present disclosure to provide a composition for preparing a thermochromic solid marker, which enables the production of a color development means for a thermochromic writing instrument capable of being erased in response to a change in temperature in the form of a solid marker having desirable physical properties.

It is another object of the present disclosure to provide a preparation method for a thermochromic solid marker using the same.

According to an aspect of the present disclosure, there is provided a composition for preparing a thermochromic solid marker comprising: 10 to 35 wt.% of microcapsule particles comprising a core composition containing a leuco dye and a developer, and a polymer resin shell surrounding the core composition; 5 to 20 wt.% of a gelling agent; 30 to 60 wt.% of water; and 0 to 10 wt.% of a glycol-based organic solvent.

In the composition of one embodiment, the core composition may further comprise a discoloration temperature controlling agent.

Further, in the composition of one embodiment, the leuco dye may comprise a fluorane-based derivative, and the developer may comprise one or more selected from the group consisting of bis(4-hydroxyphenyl)phenylmethane, 1,1-bis(4-hydroxyphenyl)-1-phenylethane, 2,2-bis(4-hydroxy-3-methylphenyl)propane, 4,4'-(1-ethylpentylidene)bisphenol, 4,4'-(1-ethyloctylidene)bisphenol and 4,4'-dihydroxydiphenylmethane.

Further, the discoloration temperature controlling agent may comprise one or more selected from the group consisting of 4,4'-(hexafluoroisopropylidene)bisphenol dicaprate, bis(4-hydroxyphenyl)phenylmethanedicaprate, bis(4-hydroxyphenyl)phenylethanedimyristate, 4-benzyloxyphenylethyl caprate, and 4-benzyloxyphenylethyl laurate.

Further, in the composition of one embodiment, the polymer resin shell may comprise a urethane resin, an epoxy resin, an amino resin, or a urea resin.

Further, the microcapsule particles may have an average particle diameter of 0.1 to 5 *µ*m.

Further, the gelling agent may comprise one or more selected from the group consisting of aliphatic carboxylic acids, aliphatic amino acids, alkali metal salts thereof, and ammonium salts thereof, and the glycol-based organic solvent may comprise one or more selected from the group consisting of ethylene glycol, propylene glycol, diethylene glycol, dipropylene glycol, triethylene glycol, and tripropylene glycol.

In addition, the composition of one embodiment may further comprise a benzoate-based preservative.

On the other hand, according to another aspect of the present disclosure, there is provided a method for preparing a thermochromic solid marker using the composition of one embodiment. Such a preparation method may comprise forming the composition of one embodiment; gelling a gelling agent contained in the composition while stirring at a temperature of 50°C or more; and freezing the gelled composition while maintaining it at a temperature of -5°C or less.

In this case, the gelling may be carried out at a temperature of 50 to 90°C for 0.5 to 3 hours, and the freezing may be carried out at a temperature of -20 to -5°C for 10 to 30 hours.

### Technical Effects

The composition of one embodiment comprises microcapsule particles capable of being discolored or erased at a given temperature, and simultaneously comprises a gelling agent, water, and a predetermined organic solvent in a certain amount.

As a result of various experiments by the present inventors, it has been found that when the gelling and cooling processes in the container are carried out using such a composition, a thermochromic solid marker that can be applied to writing instruments having solid color development means, such as solid drawing materials, can be appropriately prepared.

It has also been found that such a thermochromic solid marker has the property of being erasable at a certain temperature or under the application of frictional force due to the action of the microcapsule particles, and exhibits excellent color development property, writing drying property and strength, which makes it preferably applicable to the preparation of the solid drawing materials, and the like.

Therefore, by using such a thermochromic solid marker, it is possible to provide a writing instrument being erasable and having solid color development means, thereby effectively meeting the diverse needs of consumers.

### BRIEF DESCRIPTION OF THE DRAWING

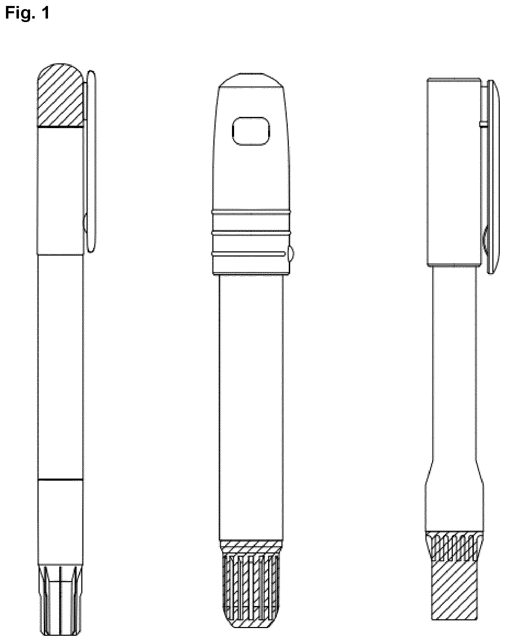

Fig. 1 shows several examples of writing instruments to which a solid marker prepared according to other embodiments of the disclosure has been applied.

### DETAILED DESCRIPTION OF THE EMBODIMENTS

Hereinafter, specific embodiments of the disclosure will be described in more detail.

The composition for preparing a thermochromic solid marker according to one embodiment basically comprises microcapsule particles, and can exhibit the property of being able to erase or discolorize at a certain temperature or under the application of frictional force due to the action of the leuco dye and developer contained in the microcapsule particles.

The leuco dye contained in the microcapsule particles is a dye that has long been well known as a thermosensitive discoloration dye. Such leuco dye molecules may have, for example, a lactone skeleton, a pyridine skeleton, a quinazoline skeleton, or a bisquinazoline skeleton in their structure, and can be attacked by protons derived from acidic compounds, so that the lactone skeleton can be opened, which results in discoloration or erasure.

The type of the leuco dye that can be used in the composition of one embodiment is not particularly limited, and any leuco dye that has previously been known to be usable in erasing or discoloring microcapsules may be used. Examples of such leuco dyes include all conventionally known dyes, such as triphenylmethane-based, spiropyran-based, fluoran-based, diphenylmethane-based, rhodamine lactam-based, indoleylphthalide-based, and leucoolamine-based dyes, but leuco dyes containing fluoran-based derivatives can be appropriately used in terms of improving the color development properties of solid markers.

More specific examples of such leuco dyes include 6-(dimethylamino)-3,3-bis[4-(dimethylamino)phenyl]-1-(3H)-isobenzofuranone, 3,3-bis(p-(dimethylaminophenyl)-6-dimethylaminophthalide, 3-(4-(diethylaminophenyl)-3-(1-ethyl-2-methylindole-3-yl)phthalide, 3-(4-(diethylamino-2-ethoxyphenyl)-3-(1-ethyl-2-methylindole-3-yl)-4-azaphthalide, 1,3-dimethyl-6-diethylaminofluoran, 2-chloro-3-methyl-6-dimethylaminofluoran, 3-dibutylamino-6-methyl-7-anilinofluoran, 3-diethylamino-6-methyl-7-anilinofluoran, 3-diethylamino-6-methyl-7-xylidinofluoran, 2-(2-chloroanilino)-6-dibutylaminofluoran, 3,6-dimethyoxyfluoran, 3,6-di-n-butyoxyfluoran, 1,2-benz-6-diethylaminofluoran, 1,2-benz-6-dibutylaminofluoran, 1,2-benz-6-ethylisoamylaminofluoran, 2-methyl-6-(N-p-tolyl-N-ethylamino)fluoran, 2-(N-phenyl-N-methylamino)-6-(N-p-tolyl-N-ethylamino)fluoran, 2-(3'-trifluoromethylanilino)-6-diethylaminofluoran, 3-chloro-6-cyclohexylaminofluoran, 2-methyl-6-cyclohexylaminofluoran, 3,6-bis(diphenylamino)fluoran, 3-methoxy-4-dodecoxystyrinoquinoline and the like.

Additionally, the developer is a component capable of developing the colors of the leuco dyes, and include, for example, inorganic acids, aromatic carboxylic acids and anhydrides or metal salts thereof, organic sulfonic acids, other organic acids, phenolic compounds and the like.

More specific examples of the developer include one or more selected from the group consisting of bis(4-hydroxyphenyl)phenylmethane, 1,1-bis(4-hydroxyphenyl)-1-phenylethane, 2,2-bis(4-hydroxy-3-methylphenyl)propane, 4,4'-(1-ethylpentylidene)bisphenol, 4,4'-(1-ethyloctylidene)bisphenol, and 4,4'-dihydroxydiphenylmethane.

Such a developer may be used in an amount of 0.1 to 10 parts by weight based on 1 part by weight of the leuco dye.

On the other hand, in the microcapsule particles, the core composition may further include a discoloration temperature controlling agent. This discoloration temperature controlling agent is a component that controls the discoloration or erasure temperature of the leuco dye and the developer.

As the discoloration temperature controlling agent, any component previously known to be usable in microcapsule particles can be used without particular limitations. Specific examples include 4,4'-(hexafluoroisopropylidene)bisphenol dicaprate, bis(4-hydroxyphenyl)phenylmethanedicaprate, bis(4-hydroxyphenyl)phenylethanedimyristate, 4-benzyloxyphenylethyl caprate, 4-benzyloxyphenylethyl laurate and the like.

The discoloration temperature controlling agent may be used in an amount of 1 to 100 parts by weight based on 1 part by weight of the leuco dye.

In the composition of one embodiment, the microcapsule particles can be prepared, for example, by an interfacial polymerization method or an in situ polymerization method. More specifically, the core composition, including the aforementioned leuco dye, developer, and discoloration temperature controlling agent, may be heated and melted, an emulsifier solution may be added thereto, and then the resulting mixture may be heated and stirred to form an emulsion in the form of oil droplets. Next, a polymer resin shell or its monomer is added to the emulsion, and a polymerization reaction is carried out, for example, at a temperature of 50 to 100°C for 3 to 20 hours to prepare thermochromic microcapsule particles.

In this case, the polymer resin shell may include a urethane resin, an epoxy resin, an amino resin, or a urea resin from the viewpoints of the storage stability and writability of the core composition. Examples of the urethane resin include polymers of isocyanate and polyol, and examples of the epoxy resin include polymers of epoxy resin and amine. Further, examples of the amino resin include those formed from a melamine resin, a urea resin, a benzoguanamine resin, and the like.

Thus, in regard to the emulsion, an appropriate monomer or the polymer resin itself may be introduced according to the type of the polymer resin shell to carry out the polymerization reaction, thereby being able to prepare thermochromic microcapsule particles in which the core composition is encapsulated within the polymer resin shell.

Such microcapsule particles may have an average particle size of 0.1 to 5 µm, 1 to 4 µm, or 2 to 3 µm from the viewpoints of the coloring property, the color development property, the easy erasability and the stability, and inhibiting adverse influences from being exerted to the writing property, and this average particle diameter can be measured by means of a particle size distribution measuring equipment (e.g., a particle diameter measuring equipment LA-90, manufactured by HORIBA.

If the above average particle diameter is less than 0.1 µm, the sufficiently high drawn line density is not obtained. On the other hand, if it exceeds 5.0µm, the writing property is deteriorated, and the microcapsule color material is reduced in a dispersion stability, which are not preferred.

The microcapsule particles may be included in an amount of 10 to 35 wt.%, or 15 to 30 wt.%, based on the total weight of the composition of one embodiment for preparing a thermochromic solid marker.

Meanwhile, a composition of one embodiment comprises the microcapsule particles described above, as well as a predetermined amount of a gelling agent, an aqueous solvent such as water, a glycol-based organic solvent, and optionally a benzoate-based preservative, and this composition can be gelled and cooled to prepare a solid marker for writing instruments having desirable physical properties.

In this case, the gelling agent is a component for coagulating the composition of one embodiment, and may include one or more selected from the group consisting of aliphatic carboxylic acids, aliphatic amino acids, and alkali metal salts or ammonium salts thereof. More specific examples of such gelling agents include aliphatic carboxylic acids, aliphatic amino acids, and alkali metal salts or ammonium salts thereof, each having an aliphatic hydrocarbon group of 8 to 36 carbon atoms or 10 to 20 carbon atoms, whereby the composition of one embodiment, including the microcapsule particles, can be coagulated and appropriately solidified through a subsequent cooling process.

More specific examples of the gelling agent include aliphatic carboxylic acids such as caprylic acid, capric acid, undecanoic acid, lauric acid, myristic acid, palmitic acid, stearic acid, arachidic acid, behenic acid, lignoceric acid, cerotic acid, montanic acid, or melissic acid; or their lithium, potassium, or sodium salts. Among these, sodium laurate, sodium myristate, sodium palmitate, sodium stearate, sodium oleate, sodium behenate, or mixtures thereof may be appropriately used, with sodium stearate being most preferred.

The gelling agent may be included in an amount of 5 to 20 wt.%, or 10 to 20 wt.%, based on the total weight of the composition of one embodiment. If the amount of the gelling agent is too low, the solid marker may become soft after preparation, and if the amount of the gelling agent is too high, the viscosity of the mixture may increase, making it difficult to fill and mold into a container for cooling.

Meanwhile, the composition of one embodiment may contain 30 to 60 wt.%, or 40 to 55 wt.%, or 50 to 55 wt.%; and 0 to 10 wt.%, or 0 to 8 wt.% of a glycol-based organic solvent so as to enable the preparation of solid markers with excellent physical properties while appropriately dispersing the microcapsule particles.

In this case, if the content of water is too low, the color development of the solid marker will not remain vivid, and if the content of water is too high, the strength of the solid marker will be weakened and it may easily become damaged.

Further, the glycol-based organic solvent may be one or more selected from the group consisting of ethylene glycol, propylene glycol, diethylene glycol, dipropylene glycol, triethylene glycol, and tripropylene glycol. It is preferable to use the glycol-based organic solvent in as small an amount as possible from the viewpoint of the drying properties during the preparation of the solid marker and the color development property of the solid marker.

Meanwhile, according to another embodiment of the disclosure, a method for preparing a thermochromic solid marker using the composition of one embodiment is provided. This preparation method may comprise a step of forming a composition of the embodiment; a step of gelling a gelling agent contained in the composition while stirring at a temperature of 50°C or more; and a step of freezing the gelled composition while maintaining it at a temperature of -5°C or less.

In this case, the gelling step may be carried out at a temperature of 50 to 90°C for 0.5 to 3 hours, and the freezing step may be carried out at a temperature of -20 to -5°C for 10 to 30 hours.

In this preparation method, the composition of one embodiment is coagulated through the gelling step, then filled into a container to form a solid, followed by cooling to prepare a solid marker for writing instruments.

By using such a solid marker, it becomes possible to prepare a writing instrument having a solid coloring means that can be erased or discolored by temperature or friction, thereby meeting the diverse needs of consumers.

Several examples of writing instruments employing the solid markers prepared by the above method are illustrated in Fig. 1. As shown in Fig. 1, the solid marker can be applied as a color development means to various types of writing instruments, enabling vivid color development and clear writing with this solid marker. Further, the solid marker contain microcapsule particles in a uniformly dispersed state, enabling color development or erasure and discoloration of written portions through temperature changes or application of frictional force.

As a means for such erasure and discoloration, the writing instrument may be equipped with a friction means, such as a friction eraser. In Fig. 1, the friction eraser may be separately attached to the tail, clip, or cap portion of each writing instrument (the hatched portion of each writing instrument in Fig. 1), and this attachment portion may be on the opposite side from the solid marker.

The frictional eraser can be made by using, for example, a Stylene Butylene Stylene copolymer, a Stylene Ethylene Butylene Stylene copolymer, a Stylene Butadiene Rubber, a Nitrile Butadiene Rubber, a Silicone Rubber, a Polyethylene resin, or a Polypropylene resin. The eraser can be attached to the writing instrument. This eraser can serve to erase or discolor the area that has been colored or written on with the solid marker by applying frictional force or frictional heat.

Hereinafter, the present disclosure will be described illustratively with reference to specific examples. However, the scope of rights of the invention is not limited by these examples, and the examples are presented for illustrative purposes only.

### Preparation Example: Preparation of Microcapsule Particles

A thermochromic microcapsule pigment composition consisting of an electron-donating compound, an electron-accepting compound, and a reactive medium listed in Table 1 below, was dissolved and then added to a mixed solution consisting of an aromatic isocyanate prepolymer and a co-solvent as a shell material. The resulting mixture was then emulsified and dispersed in an aqueous PVA solution to prepare a microcapsule dispersion, thereby obtaining a thermochromic microcapsule pigment with an average particle size of 1 to 3 *µ*m.

| Component | Content(wt. %) |
|---|---|
| 1) Thermochromic microcapsule pigment composition | |
| Electron-donating compound: N,N-dimethyl-4-(2-(2-(octyloxy)phenyl)-6-phenylpyridin-4-yl)benzenamine | 1.0 |
| Electron-accepting compound: 2,2-Bis(4'-hydroxyphenyl)hexafluoropropane | 3.0 |
| Reactive medium: 4-benzyloxyphenylethyl caprate | 20.0 |

### <Example 1>

According to the following composition, each component was dispersed and stirred at a temperature of about 85°C for about 1 hour and subjected to gelation and coagulation. The resulting mixture was then filled into a container to form a solid, and then frozen and developed at -10°C or below for 24 hours to prepare the solid marker of Example 1.

| | |
|---|---|
| Microcapsule particles of Preparation Examp le | 20 parts by weight |
| Water | 50 parts by weight |
| Sodium stearate as a gelling agent | 20 parts by weight |
| Propylene glycol as a glycol solvent | 10 parts by weight |
| Sodium benzoate as a preservative | 0.3 parts by weight |

### <Example 2>

According to the following composition, each component was dispersed and stirred at a temperature of about 85°C for about 1 hour and subjected to gelation and coagulation. The resulting mixture was then filled into a container to form a solid, and then frozen and developed at -10°C or below for 24 hours to prepare the solid marker of Example 2.

| | |
|---|---|
| Microcapsule particles of Preparation Examp le | 20 parts by weight |
| Water | 55 parts by weight |
| Sodium stearate as a gelling agent | 15 parts by weight |
| Propylene glycol as a glycol solvent | 8 parts by weight |
| Sodium benzoate as a preservative | 0.3 parts by weight |

### <Example 3>

According to the following composition, each component was dispersed and stirred at a temperature of about 85°C for about 1 hour and subjected to gelation and coagulation. The resulting mixture was then filled into a container to form a solid, and then frozen and developed at -10°C or below for 24 hours to prepare the solid marker of Example 3.

| | |
|---|---|
| Microcapsule particles of Preparation Examp le | 25 parts by weight |
| Water | 55 parts by weight |
| Sodium stearate as a gelling agent | 15 parts by weight |
| Sodium benzoate as a preservative | 0.3 parts by weight |

### <Comparative Example 1>

According to the following composition, each component was dispersed and stirred at a temperature of about 85°C for about 1 hour and subjected to gelation and coagulation. The resulting mixture was then filled into a container to form a solid, and then frozen and developed at -10°C or below for 24 hours to prepare the solid marker of Comparative Example 1.

| | |
|---|---|
| Microcapsule particles of Preparation Example | 40 parts by weight |
| Water | 25 parts by weight |
| m Sodium stearate as a gelling agent | 20 parts by weight |
| Propylene glycol as a glycol solvent | 10 parts by weight |
| Sodium benzoate as a preservative | 0.3 pt.wt |

### <Comparative Example 2>

According to the following composition, each component was dispersed and stirred at a temperature of about 85°C for about 1 hour and subjected to gelation and coagulation. The resulting mixture was then filled into a container to form a solid, and then frozen and developed at -10°C or below for 24 hours to prepare the solid marker of Comparative Example 2.

| | |
|---|---|
| Microcapsule particles of Preparation Exam ple | 20 parts by weight |
| Water | 50 parts by weight |
| Sodium stearate as a gelling agent | 10 parts by weight |
| Propylene glycol as a glycol solvent | 20 parts by weight |
| Sodium benzoate as a preservative | 0.3 parts by weight |

### <Comparative Example 3>

According to the following composition, each component was dispersed and stirred at a temperature of about 85°C for about 1 hour and subjected to gelation and coagulation. The resulting mixture was then filled into a container to form a solid, and then frozen and developed at -10°C or below for 24 hours to prepare the solid marker of Comparative Example 3.

| | |
|---|---|
| Microcapsule particles of Preparation Example | 20 parts by weight |
| Water | 47 parts by weight |
| Sodium stearate as a gelling agent | 25 parts by weight |
| Propylene glycol as a glycol solvent | 8 parts by weight |
| Sodium benzoate as a preservative | 0.3 parts by weight |

### <Experimental Example>

The physical properties of the solid markers of Examples and Comparative Examples were evaluated under the following criteria, and the results are summarized in Table 2.

### <Color Developing Property>

Each composition was gelled, filled into a container, frozen and developed, and then visually observed:
O: Excellent in color developing density, △: Light in hue development, X: No color development

### <Writing Drying Property>

After applying the blended components onto A4 copy paper, the drying properties were evaluated over time:
O: Drying was completed within 5 minutes, △: Drying was completed within 5~15 minutes, X: 15 minutes or more was required for drying

### <Strength>

Using a solid marker having an outer diameter of 8.5 mm as a reference, the bending strength was measured in the same manner as in Section 7.6 (Bending strength test method) of the KS G 2613:2019 standard.
O: 200-500 gf, △: 100-200 gf, X: less than 100 gf, or more than 500 gf

**[Table 2]**

| | Example 1 | Example 2 | Example 3 | Comparative Example 1 | Comparative Example 2 | Comparative Example 3 |
|---|---|---|---|---|---|---|
| Color developing property | ○ | ○ | ○ | X | X | ○ |
| Writing drying property | ○ | ○ | ○ | ○ | X | ○ |
| Bending strength | ○ | ○ | ○ | ○ | X | X |

Referring to Table 2, it was confirmed that the solid markers prepared in Examples exhibit excellent color development property, writing drying property and strength, and thus could be applied as solid color development means for writing instruments. In contrast, it was confirmed that the solid markers of Comparative Examples, in which the content of each component was not optimized, exhibited unclear color development property or insufficient drying property or strength.

Although preferred embodiments of a thermochromic solid marker of the present disclosure have been described in detail above, the scope of the present disclosure is not limited thereto, and various modifications and improvements made by those skilled in the art using the basic concepts of the present invention, which are defined in the appended claims, also belong to the scope of the present disclosure.

## Claims

1. A composition for preparing a thermochromic solid marker comprising:
10 to 35 wt.% of microcapsule particles comprising a core composition containing a leuco dye and a developer, and a polymer resin shell surrounding the core composition;
5 to 20 wt.% of a gelling agent;
30 to 60 wt.% of water; and
0 to 10 wt.% of a glycol-based organic solvent.

2. The composition for preparing a thermochromic solid marker according to claim 1, wherein the core composition further comprises a discoloration temperature controlling agent.

3. The composition for preparing a thermochromic solid marker according to claim 1, wherein the leuco dye comprises a fluorane-based derivative.

4. The composition for preparing a thermochromic solid marker according to claim 1, wherein the developer comprises one or more selected from the group consisting of bis(4-hydroxyphenyl)phenylmethane, 1,1-bis(4-hydroxyphenyl)-1-phenylethane, 2,2-bis(4-hydroxy-3-methylphenyl)propane, 4,4'-(1-ethylpentylidene)bisphenol, 4,4'-(1-ethyloctylidene)bisphenol, and 4,4'-dihydroxydiphenylmethane.

5. The composition for preparing a thermochromic solid marker according to claim 2, wherein the discoloration temperature controlling agent comprises one or more selected from the group consisting of 4,4'-(hexafluoroisopropylidene)bisphenol dicaprate, bis(4-hydroxyphenyl)phenylmethanedicaprate, bis(4-hydroxyphenyl)phenylethanedimyristate, 4-benzyloxyphenylethyl caprate, and 4-benzyloxyphenylethyl laurate.

6. The composition for preparing a thermochromic solid marker according to claim 1, wherein the polymer resin shell comprises a urethane resin, an epoxy resin, an amino resin, or a urea resin.

7. The composition for preparing a thermochromic solid marker according to claim 1, wherein the microcapsule particles have an average particle diameter of 0.1 to 5 *µ*m.

8. The composition for preparing a thermochromic solid marker according to claim 1, wherein the gelling agent comprises one or more selected from the group consisting of aliphatic carboxylic acids, aliphatic amino acids, alkali metal salts thereof, and ammonium salts thereof.

9. The composition for preparing a thermochromic solid marker according to claim 1, wherein the glycol-based organic solvent comprises one or more selected from the group consisting of ethylene glycol, propylene glycol, diethylene glycol, dipropylene glycol, triethylene glycol, and tripropylene glycol.

10. The composition for preparing a thermochromic solid marker according to claim 1, further comprising a benzoate-based preservative.

11. A method for preparing a thermochromic solid marker, the method comprising:
forming a composition according to any one of claims 1 to 10;
gelling a gelling agent contained in the composition while stirring at a temperature of 50°C or more; and
freezing the gelled composition while maintaining it at a temperature of - 5°C or less.

12. The method for preparing a thermochromic solid marker according to claim 11, wherein the gelling is carried out at a temperature of 50 to 90°C for 0.5 to 3 hours.

13. The method for preparing a thermochromic solid marker according to claim 11, wherein the freezing is carried out for 10 to 30 hours.
